(19) **Europäisches Patentamt / European Patent Office / Office européen des brevets**

(11) **EP 1 886 971 A1**

(12) **EUROPÄISCHE PATENTANMELDUNG**

(43) Veröffentlichungstag:
**13.02.2008 Patentblatt 2008/07**

(51) Int Cl.:
*C01B 33/029* (2006.01)    *C01B 33/03* (2006.01)
*C01B 33/035* (2006.01)

(21) Anmeldenummer: **07112778.1**

(22) Anmeldetag: **19.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **08.08.2006 DE 102006037020**

(71) Anmelder: **Wacker Chemie AG**
**81737 München (DE)**

(72) Erfinder:
• **Altmann, Thomas**
 **84533, Haiming (DE)**
• **Sendlinger, Hans-Peter**
 **84508, Burgkirchen (DE)**
• **Crößmann, Ivo**
 **21029, Hamburg (DE)**

(74) Vertreter: **Potten, Holger et al**
**Wacker Chemie AG**
**Zentralbereich Patente, Marken und Lizenzen**
**Hanns-Seidel-Platz 4**
**81737 München (DE)**

(54) **Verfahren und Vorrichtung zur Herstellung von hochreinem polykristallinem Silicium mit reduziertem Dotierstoffgehalt**

(57) Die vorliegende Erfindung betrifft ein Verfahren zur chargenweisen Herstellung von hochreinem polykristallinen Silicium, bei dem in einem geöffneten Abscheidereaktor ein U-förmiger Trägerkörper aus Silicium befestigt wird, der Abscheidereaktor luftdicht verschlossen wird, der U-förmige Trägerkörper durch direkten Stromdurchgang aufgeheizt wird, in den Abscheidereaktor durch eine Zuführleitung ein siliciumhaltiges Reaktionsgas und Wasserstoff eingeleitet wird, wodurch auf dem Trägerkörper Silicium aus dem Reaktionsgas abgeschieden wird, der Durchmesser des Trägerkörpers anwächst und ein Abgas entsteht, welches durch eine Abführleitung aus dem Abscheidereaktor entfernt wird, und nach Erreichen eines erwünschten Durchmessers des Trägerkörpers die Abscheidung beendet wird, der Trägerkörper auf Raumtemperatur abgekühlt wird, der Abscheidereaktor geöffnet wird, der Trägerkörper aus dem Abscheidereaktor entfernt wird und ein zweiter U-förmiger Trägerkörper aus Silicium im Abscheidereaktor befestigt wird, dadurch gekennzeichnet, dass ab dem Öffnen des Abscheidereaktors zum Ausbau des ersten Trägerkörpers mit abgeschiedenem Silicium bis zum Schließen des Reaktors zum Abscheiden von Silicium auf dem zweiten Trägerkörper ein Inertgas durch die Zuführleitung und die Abführleitung hindurch in den geöffneten Reaktor eingeführt wird.

**EP 1 886 971 A1**

**Beschreibung**

Die Erfindung betrifft ein Verfahren und eine Vorrichtung zur Herstellung von hochreinem polykristallinem Silicium mit reduziertem Dotierstoffgehalt sowie das so hergestellte Silicium.

Hochreines polykristallines Silicium (Polysilicium) dient als Ausgangsmaterial zur Herstellung von einkristallinem Silicium für Halbleiter nach dem Czochralski-Verfahren (CZ) oder dem Zonenschmelzverfahren (FZ = floating zone) sowie zur Herstellung von Solarzellen für die Photovoltaik. Es wird in der Regel chargenweise im Siemens Prozess hergestellt. Dabei wird ein siliciumhaltiges Reaktionsgas thermisch zersetzt oder durch Wasserstoff reduziert und als hochreines Silicium an dünnen Filamentstäben aus Silicium, so genannten Dünnstäben oder Seelen, abgeschieden. Die siliciumhaltige Komponente des Reaktionsgases kann ein Halogensilan der allgemeinen Zusammensetzung $SiH_nX_{4-n}$ (n=0, 1, 2, 3; X=Cl, Br, I) sein. Bevorzugt handelt es sich um Chlorsilane (X=Cl), besonders bevorzugt um Trichlorsilan (n=1).

Das Verfahren wird in einem Abscheidereaktor durchgeführt. In der gebräuchlichsten Ausführungsform umfasst der Abscheidereaktor eine metallische Grundplatte und eine kühlbare Glocke, die auf die Grundplatte gesetzt ist, so dass ein Reaktionsraum im Inneren der Glocke entsteht. Der Abscheidereaktor muss gasdicht verschließbar sein, da die Reaktionsgase korrosiv wirken und im Gemisch mit Luft zur Selbstentzündung bzw. zur Explosion neigen. Die Grundplatte ist mit einer oder mehreren Zuführöffnungen und einer oder mehreren Abführöffnungen für die gasförmigen Reaktionsgase sowie mit Halterungen versehen, mit deren Hilfe die Dünnstäbe im Reaktionsraum gehalten werden. In der Regel sind zwei benachbarte Stäbe an ihren freien, den gehaltenen Fußenden gegenüberliegenden Enden durch eine Brücke zu einem U-förmigen Trägerkörper verbunden. Die U-förmigen Trägerkörper werden durch direkten Stromdurchgang auf die Abscheidetemperatur aufgeheizt und das Reaktionsgas zugeführt.

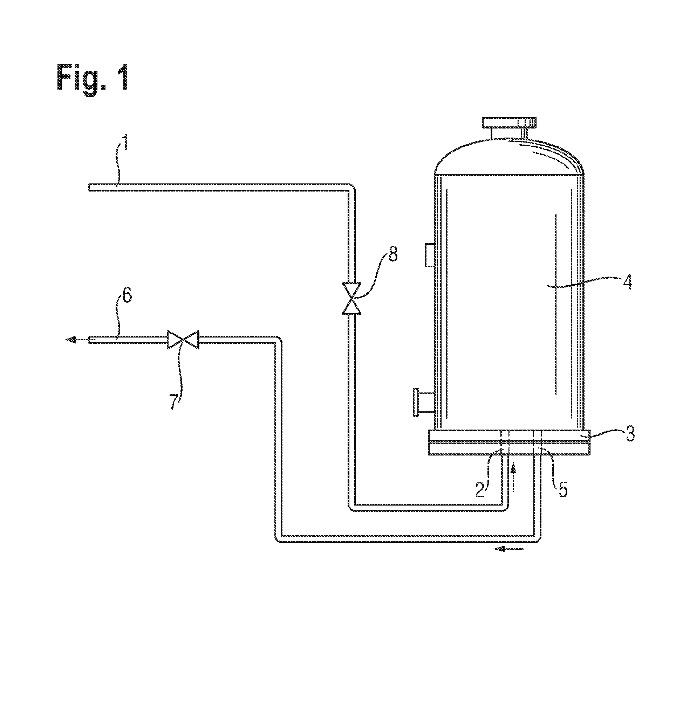

Fig. 1 zeigt eine Vorrichtung gemäß Stand der Technik zur Abscheidung von Polysilicium. Zur Abscheidung von Polysilicium werden das Absperrventil (8) für das zum Reaktor (4) strömende Reaktionsgas (1), ein Gemisch aus Wasserstoff und einer der genannten siliciumhaltigen Komponenten sowie das Absperrventil (7) für das aus dem Reaktor (4) strömende Abgas (7) geöffnet. Das Reaktionsgas (1) strömt durch die Zuführöffnung (2) der Bodenplatte (3) in den geschlossenen Abscheidereaktor (4). Dort erfolgt die Abscheidung des Siliciums auf den durch direkten Stromdurchgang erhitzten Dünnstäben (nicht dargestellt). Das dabei im Reaktor (4) entstehende heiße Abgas verlässt den Reaktor durch die Abführöffnung (5) in der Bodenplatte (3) und kann anschließend einer Aufbereitung, beispielsweise einer Kondensation, unterzogen oder einem Wäscher zugeführt werden.

Beim Abscheiden von Silicium zersetzen sich die halogenhaltigen Siliciumverbindungen, beispielsweise das Trichlorsilan, aus der Gasphase an der Oberfläche der erhitzten Dünnstäbe. Dabei wächst der Durchmesser der Dünnstäbe. Nach dem Erreichen eines gewünschten Durchmessers wird die Abscheidung beendet und die hierbei entstandenen Polysiliciumstäbe auf Raumtemperatur abgekühlt.

Nach Abkühlung der Stäbe wird die Glocke geöffnet und die Stäbe werden mit Ausbauhilfen zur Weiterverarbeitung entnommen. Anschließend werden Glocke und Bodenplatte des Reaktors gereinigt und mit neuen Elektroden und Dünnstäben für die nächste Abscheidungscharge versehen. Nach dem Verschluss der Glocke wird das Verfahren zur Abscheidung der nächsten Charge Polysilicium erneut wie beschrieben durchgeführt.

Ab dem Zeitpunkt des Öffnens des Reaktors zum Ausbau der abgeschiedenen Charge Polysilicium bis zum erneuten Schließen des Reaktors zum Abscheiden der nachfolgenden Charge Polysilicium sind die Bodenplatte und die Zu- und Abführöffnungen für die Reaktionsgase und die Abgase umgebungsbedingten Einflüssen, insbesondere der Luftfeuchtigkeit, ausgesetzt. Beim Eindringen von Feuchtigkeit, insbesondere in die Zu- und Abführleitungen des Reaktors, kommt es durch Halogensilanreste, beispielsweise nicht umgesetztes Reaktionsgas, oder im Verfahren gebildete Halogensilane oder Polysilane, zur Bildung von korrosiven Halogenwasserstoffen, beispielsweise Chlorwasserstoff.

Der Halogenwasserstoff korrodiert Reaktorbauteile, insbesondere die Zu- und Abführleitungen in den Reaktor. Dabei werden aus den Bauteilen des Reaktors prozessschädliche Substanzen, wie beispielsweise die elektrisch aktiven Dotierstoffe Bor, Aluminium, Phosphor, Arsen und Antimon herausgelöst. Diese Substanzen werden bei der nachfolgenden Abscheidung, besonders zu Abscheidebeginn, in erhöhtem Maße in das abgeschiedene Silicium eingetragen. Dieser Dotierstoffeintrag verändert in unerwünschter Weise die charakteristischen Eigenschaften des Polysiliciums. So wird zum Beispiel der spezifische elektrische Widerstand, der im Silicium maßgeblich durch den Gehalt an elektrisch aktiven Dotierstoffen bestimmt wird, zu Abscheidebeginn erniedrigt, was gleichzeitig zu einem schlechteren radialen Verlauf des spezifischen elektrischen Widerstands im abgeschiedenen Polystab führt.

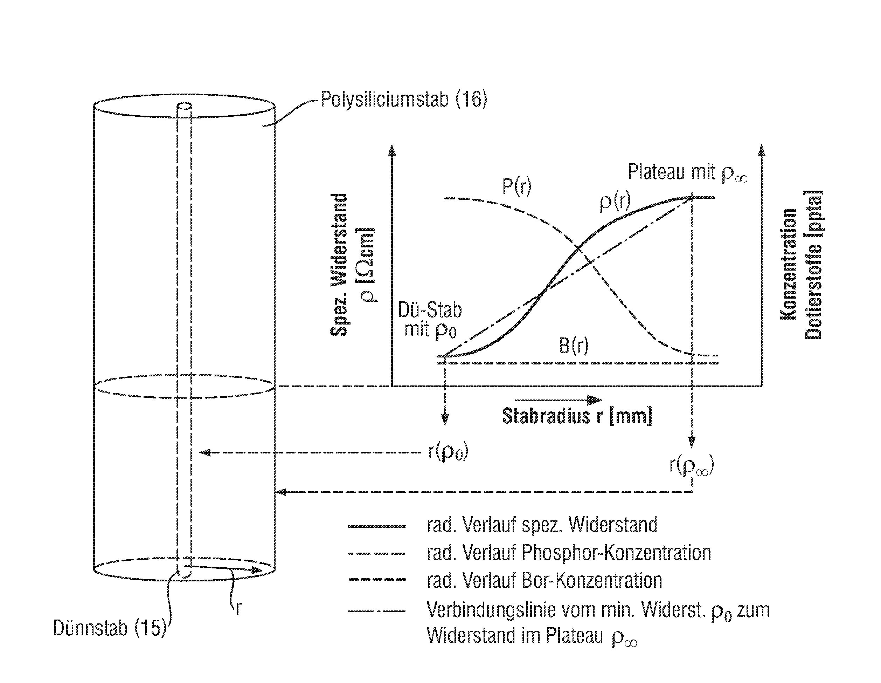

Bei, wie beschrieben, durch Abscheidung auf einem Dünnstab hergestelltem Polysilicium ist der spezifische elektrische Widerstand an der Oberfläche des Dünnstabs unmittelbar nach Abscheidungsbeginn daher am niedrigsten. Er steigt von dort stetig in Richtung des Stabrandes hin bis zum Erreichen eines Plateaus an. Bewirkt wird dies, wie schematisch in Fig. 2 dargestellt, durch einen vom Dünnstab (15) in Richtung Rand des Polysilicium-Stabes (16) hin abnehmenden Phosphorgehalt bei nahezu konstantem Borgehalt. Dieser Effekt wirkt sich umso nachteiliger aus, je später im Verlauf der Abscheidung dieses Widerstandsplateau erreicht wird. Der mittlere spezifische elektrische Widerstand eines solchen Polysilicium-Stabes fällt über den gesamten abgeschiedenen Durchmesser hinweg kleiner aus, als bei Polysilicium-Stäben, bei welchen im radialen Widerstandsverlauf bei gleichem Enddurchmesser dieses Plateau schneller erreicht wurde. Dies ist besonders störend, wenn aus dem polykristallinen Silicium monokristallines Silicium nach dem Fließzonenverfahren (FZ) hergestellt werden soll, welches ein Ausgangsmaterial mit besonders niedrigen Dotierstoffwerten, d.h. einem möglichst hohen spezifischen elektrischen Widerstand erfordert.

Zur quantitativen Bestimmung und zur Beurteilung der Güte des radialen Widerstandsverlaufs, kann sehr gut die Steigung der Gerade ausgehend vom minimalen Widerstand $\rho_0$ des abgeschiedenen Polysiliciums an der Oberfläche des Dünnstabs unmittelbar nach Abscheidungsbeginn an der Position $r = r(\rho_0) = 0$ (Definition: $r = 0$ ist der Beginn des Polystabes) bis zum Erreichen des Widerstandsplateaus $\rho_\infty$ bei $r = r(\rho_\infty)$ verwendet werden:

$$m_\rho = \Delta\rho/\Delta r = \frac{\rho_\infty - \rho_0}{r(\rho_\infty) - r(\rho_0)}$$

Je größer der Zahlenwert für $m_\rho$ ist, desto schneller wird im radialen Widerstandsverlauf das Plateau erreicht und desto höher ist folglich der mittlere spez. elektrische Widerstand des polykristallinen Siliciumstabs über den gesamten abgeschiedenen Durchmesser hinweg.

Dabei gilt:

$m_\rho$ = Steigung des radialen spez. elektrischen Widerstands-verlaufs bis zum Erreichen des Plateaus [$\Omega$cm/mm]
$\rho_\infty$ spez. el. Widerstand zu Beginn des Plateaus [$\Omega$cm]
$\rho_0$ = minimaler spez. el. Widerstand des abgeschiedenen Poly-siliciums an der Oberfläche des Dünnstabs, unmittelbar nach Abscheidungsbeginn [$\Omega$cm],
$r(\rho_\infty)$= Radius des Polysilicium-Stabs zu Beginn des Plateaus[mm]
$r(\rho_0)$= Radius des Polysilicium-Stabs an der Oberfläche des Dünnstabs unmittelbar nach Abscheidungsbeginn [mm], dieser wird als $r = 0$ definiert.

Nach dem Stand der Technik hergestellte Polysilicium-Stäbe mit hohem spezifischen elektrischen Widerstand für die Verwendung als FZ-Poly weisen bei der Steigung des radialen Widerstandsverlaufs Werte zwischen 45 und 70 $\Omega$cm/mm auf.

Zur Ermittlung des Widerstands und des Gehalts an Dotierstoffen werden dem polykristallinen Silicium üblicherweise Proben entsprechend der Norm SEMI MF 1723-1104 (23.10.2003) entnommen und durch Zonenziehen präpariert.

Die Bestimmung des Widerstands wird entsprechend der Norm SEMI MF 397-02 (22.10.2003) und die Bestimmung der Dotierstoffe entsprechend der Norm SEMI MF 1389-0704 (22.10.2003) durchgeführt. Die genannten Normen sind veröffentlicht von: Semiconductor Equipment and Materials International (SEMI®), San Jose, CA. (U.S.A.).

Aus GB 1532649 ist bekannt, in einem Verfahren zur Abscheidung von polykristallinem Silicium auf einer Grafitoberfläche vor Beginn des Aufheizens der Abscheideoberfläche bzw. kurz vor der Abscheidung, den geschlossene Reaktor mit einem Inertgas, beispielsweise Argon, zu spülen. Diese Inertgasspülung zum Freispülen eines geschlossenen Reaktors während des laufenden Prozesses erfolgt zur Inertisierung oder zur Vermeidung explosiver Gasgemische (Sauerstoffentfernung).

Die Aufgabe der vorliegenden Erfindung bestand darin, ein Verfahren zur chargenweisen Herstellung von hochreinem polykristallinen Silicium mit möglichst niedriger Dotierstoffkonzentration und möglichst hohem mittleren spezifischen elektrischen Widerstand bereitzustellen, welches die Nachteile des Stands der Technik vermeidet.

Die Aufgabe wird gelöst durch ein Verfahren, bei dem in einem geöffneten Abscheidereaktor ein U-förmiger Trägerkörper aus Silicium befestigt wird, der Abscheidereaktor luftdicht verschlossen wird, der U-förmige Trägerkörper durch direkten Stromdurchgang aufgeheizt wird, in den Abscheidereaktor durch eine Zuführleitung ein siliciumhaltiges Reaktionsgas und Wasserstoff eingeleitet wird, wodurch auf dem Trägerkörper Silicium aus dem Reaktionsgas abgeschieden wird, der Durchmesser des Trägerkörpers anwächst und ein Abgas entsteht, welches durch eine Abführleitung aus dem Abscheidereaktor entfernt wird und nach Erreichen eines erwünschten Durchmessers des Trägerkörpers die Abscheidung beendet wird, der Trägerkörper auf Raumtemperatur abgekühlt wird, der Abscheidereaktor geöffnet wird, der Trägerkörper aus dem Abscheidereaktor entfernt wird und ein zweiter U-förmiger Trägerkörper aus Silicium im Abscheidereaktor befestigt wird, dadurch gekennzeichnet, dass ab dem Öffnen des Abscheidereaktors zum Ausbau des ersten Trägerkörpers mit abgeschiedenem Silicium bis zum Schließen des Reaktors zum Abscheiden von Silicium auf dem zweiten Trägerkörper ein Inertgas durch die Zuführleitung und die Abführleitung hindurch in den geöffneten Reaktor eingeführt wird.

Der U-förmige Trägerkörper, der in den Reaktor eingebaut wird, kann aus monokristallinem, multikristallinem oder polykristallinem Silicium bestehen.

Vorzugsweise erfolgt die Zufuhr des Inertgases durch die Zuführleitung und die Abführleitung hindurch durch die Zu- und Abführöffnungen der Bodenplatte, wobei in die Leitungen auch ein Wärmetauscher oder ein Sättiger eingebaut sein kann.

Vorzugsweise erfolgt ferner eine Zufuhr des Inertgases in die zum Ausbau des Polysilicium-Stabes angehobene Glocke des Abscheidereaktors.

Die Zufuhr des Inertgases erfolgt dabei vorzugsweise über eine nach oben gerichtete, eingeschwenkte Düse.

Als Inertgas werden beispielsweise Stickstoff oder ein Edelgas, wie Argon oder Helium verwendet. Vorzugsweise wird Stickstoff oder Argon verwendet, besonders bevorzugt Stickstoff.

Das erfindungsgemäße Verfahren schützt die Bodenplatte sowie die Zu- und Abführleitungen des Abscheidereaktors vor dem Eindringen umgebungsbedingter Einflüsse, insbesonders von Luftfeuchtigkeit, und entfernt Halogensilanreste, insbesondere Trichlorsilanreste oder auch Polysilanreste aus den Zu- und Abführleitungen. Damit wird die Bildung von Halogenwasserstoff, insbesondere Chlorwasserstoff, vermieden und daraus resultierend ein Herauslösen von Dotierstoffen, insbesondere Phosphor, aus dem Material der Zu- und Abführleitungen vermieden.

Das erfindungsgemäße Verfahren bewirkt zudem eine reduzierte Streuung der Dotierstoffpegel, insbesondere von Phosphor, von Charge zu Charge.

Das erfindungsgemäße Verfahren ermöglicht die Herstellung eines polykristallinen Siliciumstabs, welcher einen höheren spezifischen elektrischen Widerstand an der Oberfläche des Dünnstabs unmittelbar nach Abscheidungsbeginn aufweist, als ein bekannter polykristalliner Siliciumstab. Daraus resultiert ein polykristalliner Siliciumstab, der eine größere Steigung des radialen Verlaufs des spezifischen elektrischen Widerstands aufweist.

Die Erfindung betrifft daher auch einen polykristallinen Siliciumstab, der dadurch gekennzeichnet ist, dass er eine Steigung $m_\rho$ des radialen Verlaufs des spezifischen elektrischen Widerstands, mindestens 75 $\Omega$cm/mm, bevorzugt zwischen 80 $\Omega$cm/mm und 200 $\Omega$cm/mm, besitzt.

Dieser polykristalline Siliciumstab ist erhältlich mittels des erfindungsgemäßen Verfahrens, wobei er besonders bevorzugt durch Abscheidung aus Trichlorsilan hergestellt wird.

Der höhere spezifische elektrische Widerstand des polykristallinen Siliciumstabs beruht auf einem verminderten Dotierstoffeintrag, insbesondere von Phosphor, in das Polysilicium zu Beginn des Abscheidungsprozesses.

Das erfindungsgemäße polykristalline Silicium ist vorzugsweise zur Herstellung von monokristallinem Silicium, besonders bevorzugt zur Herstellung von monokristallinem Silicium nach dem FZ-Verfahren, geeignet.

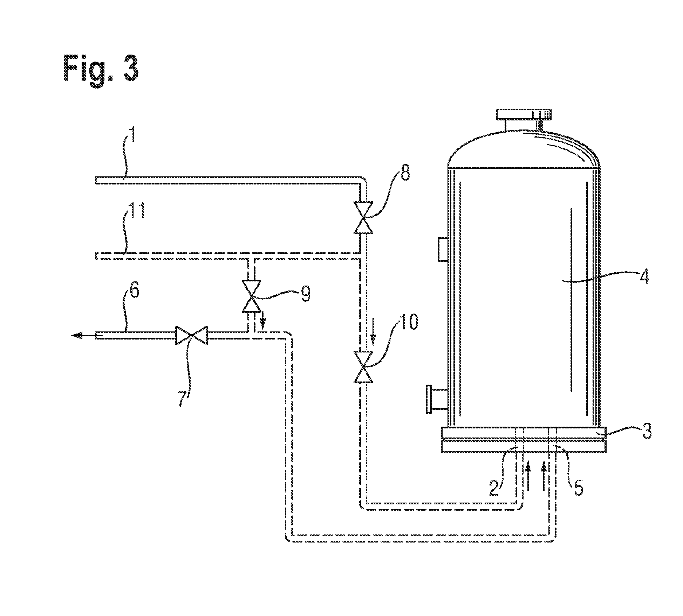

Die Erfindung betrifft ferner eine Vorrichtung zur Durchführung des erfindungsgemäßen Verfahrens. Eine solche Vorrichtung ist in Fig. 3 dargestellt.

Diese Vorrichtung umfasst eine Zuführleitung für ein Reaktionsgas (1) mit einem Absperrventil (8), welche über eine Zuführöffnung (2) durch die Bodenplatte (3) in einen Reaktor (4) führt, sowie eine Abführleitung für ein Abgas (6), welche durch eine Abführöffnung (5) in der Bodenplatte (3) des Reaktors (4) über ein Absperrventil(7) ins Freie oder zu einer Aufbereitung führt, dadurch gekennzeichnet, dass in die Zuleitung (1) nach dem Absperrventil (8) eine Inertgasleitung (11) mündet, welche durch ein Absperrventil (10) regelbar ist und in die Ableitung (6) vor dem Absperrventil (7) eine Inertgasleitung (11) mündet, welche durch ein Absperrventil (9) regelbar ist.

Zur Durchführung des erfindungsgemäßen Verfahrens mittels dieser Vorrichtung werden vor dem Öffnen des Abscheidereaktors zur Entnahme der auf Raumtemperatur abgekühlten, abgeschiedenen Stäbe aus polykristallinem Silicium die Absperrventile (7) und (8) für das Abgas (6) und das Reaktionsgas (1) geschlossen. Anschließend werden die beiden Zugabeventile für das Inertgas (9) und (10) geöffnet. Das Inertgas fließt nun gleichzeitig durch die Leitung für das Abgas (6) und das Reaktionsgas (1) durch die Zuführöffnung (2) und die Abführöffnung (5) durch die Bodenplatte (3) in den Reaktor (4) hinein. In der Zuführleitung beträgt die Inertgasdurchflussmenge zur Vermeidung einer Rückdiffusion, abhängig vom verwendeten Leitungsquerschnitt, vorzugsweise mindestens 0,5 m³/h, besonders bevorzugt 1 m³/h bis 10 m³/h. Bei der Abführleitung beträgt die Inertgasmenge denselben Gesichtspunkten entsprechend vorzugsweise mindestens 1 m³/h, besonders bevorzugt 3 m³/h bis 10 m³/h.

Vorzugsweise umfasst die erfindungsgemäße Vorrichtung ferner einen senkrecht nach oben gerichteten Inertgasaustritt (13) für das Inertgas (12) bestehend aus einer oder mehreren Düsen ("Duschkopfprinzip"), welche mittels eines Absperrventils (12) regelbar ist. Die Durchflussmenge des Inertgases beträgt hier vorzugsweise mindestens 0,5 m³/h, besonders bevorzugt 3 m³/h bis 10 m³/h.

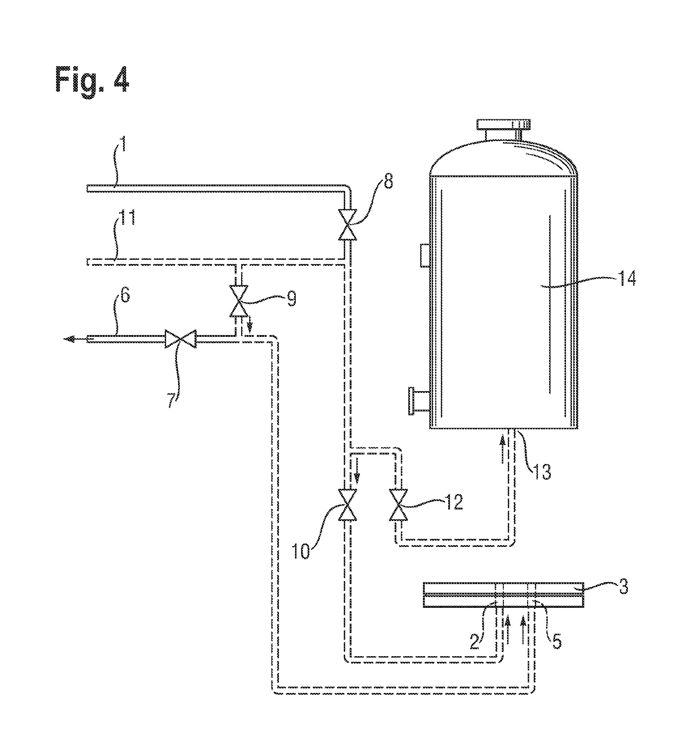

Figur 4 zeigt eine derartige erfindungsgemäße Vorrichtung.

Bei der Durchführung des erfindungsgemäßen Verfahrens unter Nutzung einer Vorrichtung gemäß Fig. 3 wird unmittelbar nach dem Öffnen des Abscheidereaktors und dem Anheben der Glocke (14) zur Entnahme der Stäbe aus polykristallinem Silicium (nicht dargestellt) die Vorrichtung mit einem senkrecht nach oben gerichteten Inertgasaustritt (13) unter die angehobene Glocke (14) gebracht, beispielsweise durch Einschwenken oder stationäres Einhängen in die Glocke. Anschließend wird ein Inertgasventil (12) geöffnet. Das Inertgas strömt nun nach oben durch die angehobene Glocke (14). Zur Vermeidung einer Rückdiffusion beträgt die Durchflussmenge an Inertgas durch den Sprühmechanismus (13), abhängig vom verwendeten Leitungsquerschnitt, vorzugsweise mindestens 0,5 m³/h, besonders bevorzugt 3 m³/h bis 10 m³/h.

Dieses Verfahren wird ohne Unterbrechung solange fortgesetzt, bis das abgeschiedene, polykristalline Silicium vollständig aus dem Abscheidereaktor entnommen ist, sowie Dünnstäbe und Elektroden für die nächste Abscheidung eingebaut sind. Unmittelbar vor dem Schließen des Reaktors für den Start der nächsten Abscheidung wird die Vorrichtung (13) zur Inertgasspülung der Glocke (14) entfernt, beispielsweise durch Aushängen oder Wegschwenken und das Inertgasventil (12) geschlossen. Nach dem Schließen des Reaktors durch Absenken der Glocke werden die Inertgasventile (9) und (10) geschlossen. Anschließend werden die Absperrventile (7) und (8) für das Abgas (6) und die Reaktanden (1) wieder geöffnet. Der Abscheidereaktor ist nun bereit für die nächste Abscheidung, die wie im Stand der Technik bekannt durchgeführt wird.

Die folgenden Beispiele dienen der weiteren Erläuterung der Erfindung. Die Charakterisierung des Polysiliciums hinsichtlich Widerstand und Dotierstoffkonzentration erfolgte jeweils entsprechend dem Stand der Technik. Dem polykristallinen Silicium wurden hierzu Proben entsprechend der Norm SEMI MF 1723-1104 (23.10.2003) entnommen und durch Zonenziehen präpariert. Die Bestimmung des Widerstands erfolgte entsprechend der Norm SEMI MF 397-02 (22.10.2003) und die Bestimmung der Dotierstoffe entsprechend der Norm SEMI MF 1389-0704 (22.10.2003). Die genannten Normen sind veröffentlicht von: Semiconductor Equipment and Materials International (SEMI®), San Jose, CA. (U.S.A.).

**Beispiel 1:** Vergleich von Polysiliciumchargen hergestellt mit und ohne Inertgasspülung - Spez. Widerstand des abgeschiedenen Polysiliciums an der Oberfläche des Dünnstabs unmittelbar nach Abscheidungsbeginn

Die Abscheidung des polykristallinen Siliciums erfolgte wie in DE 1209113 beschrieben. Als siliciumhaltige Komponente des Reaktionsgases wurde Trichlorsilan verwendet. Während des Chargenwechsels wurden Zu- und Abführleitung sowie die Glocke, wie aus Fig. 4 ersichtlich, mit Inertgas gespült. Als Inertgas wurde Stickstoff verwendet; die gewählte Stickstoffmenge betrug in der Zuführleitung 1 m³/h, sowie in der Abführleitung und der Glocke jeweils 3 m³/h.

Untersucht wurde der minimale spezifische Widerstand des Polysiliciums an der Oberfläche des Dünnstabs unmittelbar nach Abscheidungsbeginn. Dazu wurden 80 Chargen abgeschieden mittels des erfindungsgemäßen Verfahrens mit Inertgasspülung mit 200 Chargen gemäß Stand der Technik (ohne Inertgasspülung) verglichen.

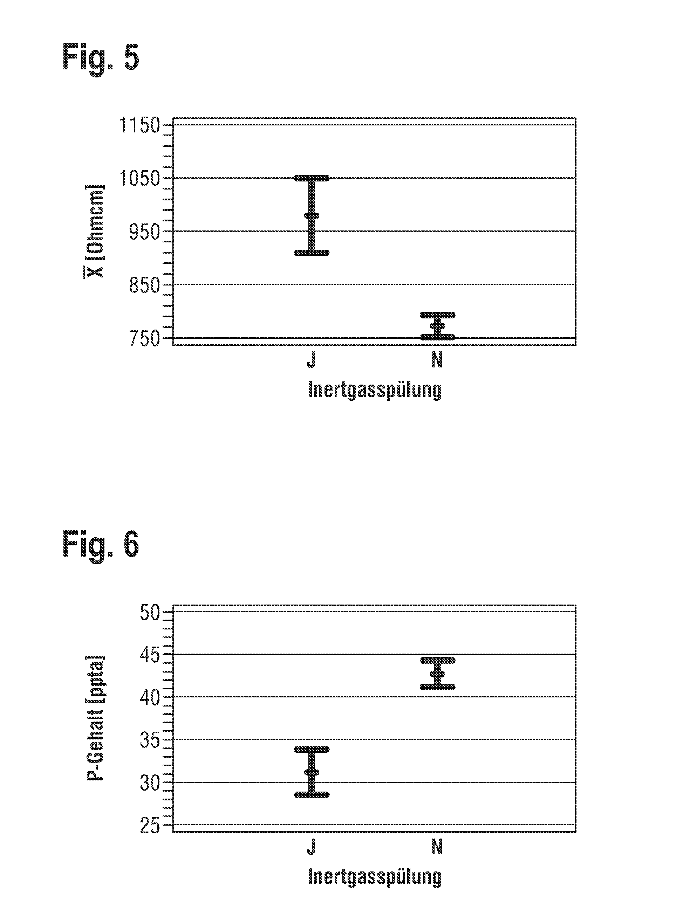

Fig. 5 zeigt den Einfluss der Inertgasspülung auf den spez. el. Widerstand des Polysiliciums an der Oberfläche des Dünnstabs unmittelbar nach Abscheidungsbeginn. Dargestellt sind die Mittelwerte und 95 %-Konfidenzintervalle des spez. el. Widerstands. Polysilicium, hergestellt mittels des erfindungsgemäßen Verfahrens (Inertgasspülung J), hat an der Oberfläche des Dünnstabs unmittelbar nach Abscheidungsbeginn um rund 30 % höhere Mittelwerte beim elektrischen Widerstand als ein Polysilicium-Stab, welcher mittels eines Verfahrens gemäß Stand der Technik (Inertgasspülung N) hergestellt wurde.

**Beispiel 2:** Vergleich von Polysiliciumchargen hergestellt mit und ohne Inertgasspülung - Widerstand und Phosphorgehalt über den gesamten abgeschiedenen Durchmesser

Die Abscheidung des polykristallinen Siliciums erfolgte wie in Bsp. 1 beschrieben. Es wurden der Phosphorgehalt und der mittlere spezifische Widerstand dieses Polysiliciums jeweils über den gesamten abgeschiedenen Durchmesser (zw. 100 und 150 mm) bestimmt. Dazu wurden 80 Chargen abgeschieden und mittels des erfindungsgemäßen Verfahrens mit Inertgasspülung mit 200 Chargen gemäß Stand der Technik (ohne Inertgasspülung) verglichen.

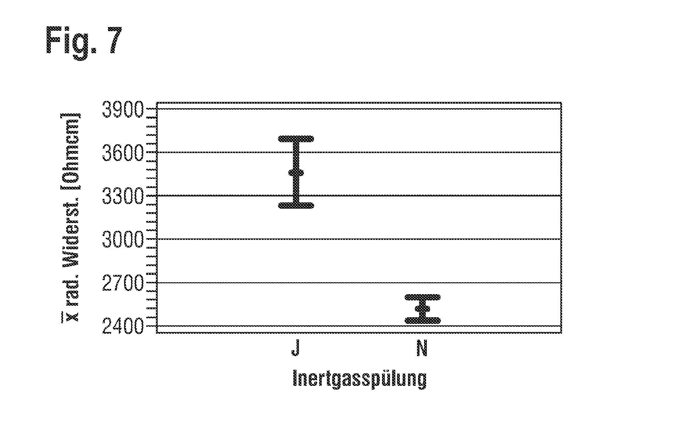

Fig. 6 zeigt den Einfluss der Inertgasspülung auf den Phosphor-Gehalt des Polysiliciums über den gesamten abgeschiedenen Durchmesser. Dargestellt sind die Mittelwerte und 95 %-Konfidenzintervalle des Phosphorgehalts über den gesamten abgeschiedenen Stabdurchmesser. Ein Polysilicium-Stab, welcher mittels des erfindungsgemäßen Verfahrens mit Inertgasspülung hergestellt wurde (Inertgasspülung J) zeigt gegenüber einem Polysilicium-Stab, welcher mittels eines Verfahrens nach Stand der Technik hergestellt wurde (Inertgasspülung N), hinsichtlich Phosphor einen um rund 40 % reduzierten Dotierstoffgehalt. Ein Polysilicium-Stab, welcher mittels des erfindungsgemäßen Verfahrens mit Inertgasspülung hergestellt wurde (Inertgasspülung J) zeigt gegenüber einem Polysilicium-Stab, welcher mittels eines Verfahrens nach Stand der Technik hergestellt wurde zudem einen wesentlich höheren mittleren spez. el. Widerstand Rho über den gesamten abgeschiedenen Stabdurchmesser (Fig 7).

**Beispiel 3:**

Die Abscheidung des polykristallinen Siliciums erfolgte wie in Bsp. 1 beschrieben. Der radiale Verlauf des spez. el. Widerstands des Polysilicium-Stabs wurde über den gesamten abgeschiedenen Durchmesser bestimmt. Dazu wurden 5 Chargen abgeschieden mittels des erfindungsgemäßen Verfahrens (Charge 1 - 5) mit Inertgasspülung mit 5 Chargen abgeschieden gemäß Stand der Technik (ohne Inertgasspülung) (Charge 1V bis 5V) verglichen. Die Parameter der Abscheidung waren bis auf den Unterschied Inertgasspülung ja bzw. nein, für alle 10 Chargen gleich. Tab. 1 zeigt die gemessenen Werte.

| Radiale Widerstandsprofile, mit Inertgasspülung im Chargenwechsel | | | | | |
|---|---|---|---|---|---|
| Charge | 1 | 2 | 3 | 4 | 5 |
| $\rho_\infty$ [$\Omega$cm] | 5342 | 6199 | 4525 | 4492 | 5981 |
| $r(\rho_\infty)$ [mm] | 50,0 | 27,9 | 44,7 | 39,1 | 47,5 |
| $\rho_0$ [$\Omega$cm] | 1222 | 1268 | 1137 | 1132 | 915 |
| $r(\rho_0)$ [mm] | 0 | 0 | 0 | 0 | 0 |
| $m_\rho$ [$\Omega$cm/mm] | 82,4 | 176,6 | 75,8 | 85,9 | 106,7 |
| Radiale Widerstandsprofile, ohne Inertgasspülung im Chargenwechsel | | | | | |
| Charge | 1V | 2V | 3V | 4V | 5V |
| $\rho_\infty$ [$\Omega$cm] | 4091 | 3850 | 3019 | 3110 | 3348 |
| $r(\rho_\infty)$ [mm] | 47,5 | 49,0 | 37,7 | 44,7 | 39,10 |
| $\rho_0$ [$\Omega$cm] | 921 | 594 | 729 | 609 | 863 |
| $r(\rho_0)$ [mm] | 0 | 0 | 0 | 0 | 0 |
| $m_\rho$ [$\Omega$cm/mm] | 66,7 | 66,4 | 60,7 | 56,0 | 63,6 |

Polysilicium-Stäbe hergestellt mittels des erfindungsgemäßen Verfahrens besitzen einen steileren Verlauf des radialen spez. el. Widerstands als die gemäß Stand der Technik hergestellten Polysilicium-Stäbe. Das Widerstandsplateau am Stabrand wird, ausgehend vom minimalen Widerstand des Polysiliciums an der Oberfläche des Dünnstabs unmittelbar nach Abscheidungsbeginn, mit dem erfindungsgemäßen Verfahren schneller erreicht. Die Steigung $m_\rho$ beträgt zwischen 75 und 180 $\Omega$cm/mm. Bei Chargen ohne Inertgasspülung beträgt die Steigung $m_\rho$ zwischen 50 und 70 $\Omega$cm/mm.

**Patentansprüche**

1.  Verfahren zur chargenweisen Herstellung von hochreinem polykristallinen Silicium, bei dem in einem geöffneten Abscheidereaktor ein U-förmiger Trägerkörper aus Silicium befestigt wird, der Abscheidereaktor luftdicht verschlossen wird, der U-förmige Trägerkörper durch direkten Stromdurchgang aufgeheizt wird, in den Abscheidereaktor durch eine Zuführleitung ein siliciumhaltiges Reaktionsgas und Wasserstoff eingeleitet wird, wodurch auf dem Trägerkörper Silicium aus dem Reaktionsgas abgeschieden wird, der Durchmesser des Trägerkörpers anwächst und ein Abgas entsteht, welches durch eine Abführleitung aus dem Abscheidereaktor entfernt wird, und nach Erreichen eines erwünschten Durchmessers des Trägerkörpers die Abscheidung beendet wird, der Trägerkörper auf Raumtemperatur abgekühlt wird, der Abscheidereaktor geöffnet wird, der Trägerkörper aus dem Abscheidereaktor entfernt wird und ein zweiter U-förmiger Trägerkörper aus Silicium im Abscheidereaktor befestigt wird, **dadurch gekennzeichnet, dass** ab dem Öffnen des Abscheidereaktors zum Ausbau des ersten Trägerkörpers mit abgeschiedenem Silicium bis zum Schließen des Reaktors zum Abscheiden von Silicium auf dem zweiten Trägerkörper ein Inertgas durch die Zuführleitung und die Abführleitung hindurch in den geöffneten Reaktor eingeführt wird.

2.  Verfahren gemäß Anspruch 1, **dadurch gekennzeichnet, dass** ferner eine Zufuhr des Inertgases in die zum Ausbau des Polysilicium-Stabes angehobenen Glocke des Abscheidereaktors erfolgt.

3.  Verfahren gemäß Anspruch 2, **dadurch gekennzeichnet, dass** die Zufuhr des Inertgases über eine nach oben gerichtete, eingeschwenkte Düse mit einer Durchflussmenge von mindestens 0,5 m$^3$/h, bevorzugt von 3 m$^3$/h bis 10 m$^3$/h, erfolgt.

4.  Verfahren gemäß einem der Ansprüche 1 bis 3, **dadurch gekennzeichnet, dass** als Inertgas Stickstoff oder ein Edelgas verwendet werden.

**5.** Verfahren gemäß Anspruch 4, **dadurch gekennzeichnet, dass** als Inertgas Stickstoff oder Argon verwendet wird.

**6.** Verfahren gemäß einem der Ansprüche 1 bis 5, **dadurch gekennzeichnet, dass** die Zufuhr des Inertgases über Zuführleitung und die Abführleitung durch die Zu- und Abführöffnungen der Bodenplatte erfolgt, wobei ein Wärmetauscher oder ein Sättiger zwischengeschaltet sein kann, und die Durchflussmenge des Inertgases durch die Zuführleitung vorzugsweise mindestens 0,5 m$^3$/h, bevorzugt 1 m$^3$/h bis 10 m$^3$/h beträgt und die Durchflussmenge des Inertgases durch die Abführleitung vorzugsweise mindestens 1 m$^3$/h, besonders bevorzugt 3 m$^3$/h bis 10m$^3$/h beträgt.

**7.** Hochreines, polykristallines Silicium, **dadurch gekennzeichnet, dass** die Steigung m$_\rho$ des radialen Verlaufs des spezifischen elektrischen Widerstands mindestens 75 $\Omega$cm/mm, bevorzugt zwischen 80 $\Omega$cm/mm und 200 $\Omega$cm/mm beträgt.

**8.** Vorrichtung zur Durchführung eines Verfahrens gemäß einem der Ansprüche 1 bis 6 umfassend eine Zuführleitung für ein Reaktionsgas (1) mit einem Absperrventil (8), welche dort über eine Zuführöffnung (2) durch die Bodenplatte (3) in einen Reaktor (4) führt sowie eine Abführleitung für ein Abgas (6), welche durch eine Abführöffnung (5) in der Bodenplatte (3) des Reaktors (4) über ein Absperrventil (7) ins Freie oder zu einer Aufbereitung führt, **dadurch gekennzeichnet, dass** in die Zuführleitung (1) nach dem Absperrventil (8) eine Inertgasleitung (11) mündet, welche durch ein Absperrventil (10) regelbar ist und in die Abführleitung (6) vor dem Absperrventil (7) eine Inertgasleitung (11) mündet, welche durch ein Absperrventil (9) regelbar ist.

# Fig. 1

# Fig. 3

# Fig. 4

## Fig. 5

## Fig. 6

# Fig. 7

**Europäisches**
**Patentamt**

**EUROPÄISCHER RECHERCHENBERICHT**

Nummer der Anmeldung

EP 07 11 2778

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 98/40543 A (KOREA RES INST CHEM TECH [KR]; KIM HEE YOUNG [KR]) 17. September 1998 (1998-09-17) * Seite 1, Zeile 3 - Zeile 11 * * Seite 10, Zeile 22 - Seite 24, Zeile 9; Abbildung 1; Beispiel 1 * ----- | 1-8 | INV. C01B33/029 C01B33/03 C01B33/035 |
| D,Y | GB 1 532 649 A (MONSANTO CO) 15. November 1978 (1978-11-15) * Seite 2, Zeile 14 - Zeile 54 * ----- | 1-7 | |
| Y | JP 63 225513 A (MITSUI TOATSU CHEMICALS) 20. September 1988 (1988-09-20) * Zusammenfassung * ----- | 1-7 | |
| A | US 2 944 874 A (IRVINE JR JOHN W) 12. Juli 1960 (1960-07-12) * Spalte 2, Zeile 36 - Zeile 39 * ----- | 1-8 | |
| A | GB 878 766 A (PLESSEY CO LTD) 4. Oktober 1961 (1961-10-04) * Seite 1, Zeile 70 - Seite 2, Zeile 4 * ----- | 1-8 | RECHERCHIERTE SACHGEBIETE (IPC) C01B |
| A | US 4 715 317 A (ISHIZUKA HIROSHI [JP]) 29. Dezember 1987 (1987-12-29) * das ganze Dokument * ----- | 1-8 | |
| A | US 4 179 530 A (GRIESSHAMMER RUDOLF [DE] ET AL) 18. Dezember 1979 (1979-12-18) * Zusammenfassung * ----- | 1-8 | |

Der vorliegende Recherchenbericht wurde für alle Patentansprüche erstellt

| Recherchenort | Abschlußdatum der Recherche | Prüfer |
|---|---|---|
| Den Haag | 6. Dezember 2007 | Lecerf, Nicolas |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
Dokument

EPO FORM 1503 03.82 (P04C03)

# EP 1 886 971 A1

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 9840543 | A | 17-09-1998 | CA | 2283562 | A1 | 17-09-1998 |
| | | | CN | 1250491 | A | 12-04-2000 |
| | | | DE | 69835078 | T2 | 01-02-2007 |
| | | | EP | 0972096 | A1 | 19-01-2000 |
| | | | JP | 3518869 | B2 | 12-04-2004 |
| | | | JP | 2000511154 | T | 29-08-2000 |
| | | | JP | 2004043301 | A | 12-02-2004 |
| | | | US | 6395248 | B1 | 28-05-2002 |
| GB 1532649 | A | 15-11-1978 | BE | 837009 | A1 | 23-06-1976 |
| | | | DE | 2558387 | A1 | 08-07-1976 |
| | | | JP | 51089817 | A | 06-08-1976 |
| JP 63225513 | A | 20-09-1988 | JP | 2031268 | C | 19-03-1996 |
| | | | JP | 7053568 | B | 07-06-1995 |
| US 2944874 | A | 12-07-1960 | KEINE | | | |
| GB 878766 | A | 04-10-1961 | BE | 566605 | A | |
| US 4715317 | A | 29-12-1987 | BR | 8505301 | A | 05-08-1986 |
| | | | DE | 3586412 | D1 | 03-09-1992 |
| | | | DE | 3586412 | T2 | 18-02-1993 |
| | | | EP | 0180397 | A2 | 07-05-1986 |
| | | | JP | 1785046 | C | 31-08-1993 |
| | | | JP | 4075161 | B | 30-11-1992 |
| | | | JP | 61101410 | A | 20-05-1986 |
| US 4179530 | A | 18-12-1979 | KEINE | | | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1532649 A

- DE 1209113